Europäisches Patentamt

European Patent Office

Office européen des brevets

(11) Publication number: **0 477 798 A2**

## EUROPEAN PATENT APPLICATION

(21) Application number: **91116046.3**

(22) Date of filing: **20.09.91**

(51) Int. Cl.5: **G01S 5/16**

(30) Priority: **27.09.90 US 588805**

(43) Date of publication of application:
**01.04.92 Bulletin 92/14**

(84) Designated Contracting States:
**DE FR GB SE**

(71) Applicant: **ALLIANT TECHSYSTEMS INC.**
**5901 Lincoln Drive**
**Edina, Minnesota 55436(US)**

(72) Inventor: **Deck, Leslie L.**
**13387 Caramel Trail**

**Eden Prairie, Minnesota 55346(US)**
Inventor: **Egli, Werner H.**
**10110 103rd Place**
**Maple Grove, Minnesota 55369(US)**

(74) Representative: **Altenburg, Udo, Dipl.-Phys. et al**
**Patent- und Rechtsanwälte**
**Bardehle-Pagenberg-Dost-Altenburg**
**Frohwitter-Geissler & Partner Postfach 86 06 20**
**W-8000 München 86(DE)**

(54) **Apparatus and method for determining the position and attitude of an object.**

(57) A position and attitude determining apparatus for use in finding the location and attitude of an object above the earth with respect to an earth coordinate system by utilizing a plurality of sources of radiation located on earth which direct radiation to the object in space and utilizing radiation sensing means on the object for determining the angles which the beams of radiation from the earth make with respect a coordinate system in the object and utilizing this information to calculate the position and altitude of the object with respect to the earth's coordinate system.

Fig. 1

## BACKGROUND OF THE INVENTION

The present invention relates to the measurement of the position and attitude of an object and more particularly to the determination of the position and attitude of an object in space relative a reference system on earth.

Systems for determining the position of an object in space are known as, for example, radar equipment where reflected energy from the object is used to determine its position or laser trackers wherein a laser beam is used to follow the trajectory of a projectile. Such apparatus is satisfactory for determining position in most cases. Attitude measuring systems are also known in the prior art as for example inertial or gyroscopic reference systems which determine attitude according to the outputs of gyroscopic member. Such attitude systems are quite costly and very complex both in apparatus and in signal processing equipment and furthermore have the difficulty of not being able to withstand the shock that may accompany the launching of a projectile.

## SUMMARY OF THE INVENTION

The present invention relates to apparatus that can withstand rough conditions of launch and which involves inexpensive apparatus with outputs that are suitable for analysis by a small computer to determine both the attitude of the object and its position.

More particularly, the present invention utilizes ground based radiation producing means, such as lasers, at least 2 or 3 of which are positioned at known locations relative to an earth reference system. Three sources are necessary to determine position but only two are required to determine attitude when position is known. More sources may be employed to get greater resolution but for the present invention, only systems employing two or three sources will be described. Each of the radiation producing means produces radiation which is detected as a beam of energy at the object in space. It should be understood that when the position of the object is known, then a fairly tight beam may be directed from the source to the object but if the object is at an unknown position, it may be better to employ a wider field of radiation so that the object can acquire it more easily. While laser sources are preferred because of their monochromatic radiation, other radiation sources may be used, and if necessary, filters can eliminate unwanted frequencies. The radiation detection is provided by a novel radiation sensor comprising a two dimensional position sensitive detector mounted in a pin hole camera arrangement. The sensors are capable of producing outputs indicative of the angle that each beam makes with respect to an arbitrary reference axis in a coordinate system of the object and this information may be telemetered to a ground base location where it is analyzed so as to determine either the position of the object in space or its attitude with respect to the earth based reference system, or both.

The invention may find primary use in testing projectiles in flight which projectiles have been launched from a location on the earth to an area above where there are targets to be destroyed. The projectiles are intended to fire lethal weapons to attack ground based targets from above. In such a situation it is necessary to know the exact location of the object in the space above the target area and its attitude with respect to the earth coordinate system as so to determine the position the lethal weapon will hit when fired. A more complete understanding of the invention will be obtained upon a reading of the following specification and claims taken in connection with the figures.

## BRIEF DESCRIPTION OF THE DRAWINGS

FIG. 1 is a schematic view of an object in space and a ground based coordinate system employing three beam producing sources.

FIG. 2 is an exploded representation of the radiation sensing detector of the present invention.

FIG. 3 is a plot made by tracing the intersection of the weapon trajectory with the ground as the object rotates and changes altitude.

## DETAILED DESCRIPTION OF THE PREFERRED EMBODIMENTS

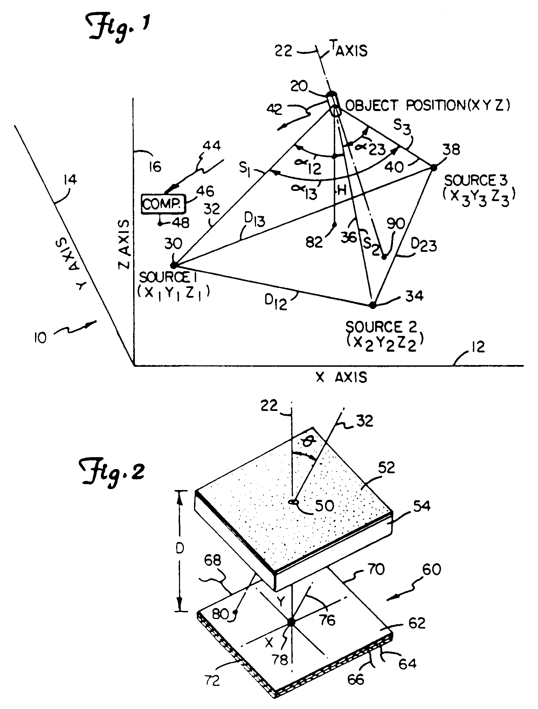

Referring to FIG. 1, a three axis coordinate system 10 is shown which, for purposes of the present invention, will be assumed as an earth reference coordinate system having an X axis 12 extending to the right, a Y axis 14 extending upwardly to the left and a Z axis 16 extending upwardly.

An object 20 is shown in FIG. 1 and may be a missile or projectile fired by an artillery device at some remote location. Object 20 is shown having an axis 22 along its length which, for purpose of explanation may be assumed to be the direction which a lethal weapon would take when fired from object 20. Object 20 may be spinning about axis other than axis 22 so as to give the object what might be described as a wobbling motion with axis 22 making circles, or more particularly a spiral, on the ground below as the object 20 wobbles and loses altitude.

It is desired to find the position of object 20 within the coordinate system 10 and also to find the intersection point of axis 22 with the ground so as to determine the trajectory of a weapon fired from object 20. More particularly, the present invention will plot a series of such intersection points as the object loses altitude.

In FIG. 1 a first source of radiation having coordinates X1, Y1 and Z1 is shown at a position 30 and emits radiation toward the object 20 along a line 32 identified as S1. A second source of radiation having coordinates X2, Y2 and Z2 is shown at a position 34 and emits radiation toward the object 20 along a line 36 identified as S2. A third source of radiation having coordinates X3, Y3 and Z3 is shown at a position 38 emitting radiation toward the object 20 along a path 40 identified as S3. Sources 1, 2 and 3 may be lasers so that they emit monochromatic radiation for ease in detection but use of a narrow beam of radiation is preferred only when the position of the object 20 is known. In other cases, wider angles of radiation should be used to facilitate acquisition by the object 20.

Object 20 should, in order to provide position information, contain at least three radiation sensitive devices such as will be described in connection with FIG. 2 and should contain at least two radiation sensitive devices when the position is known. Of course, more detectors can be employed. Each detector is operable to determine the angle between beams 32, 36 and 40 and an arbitrary axis such as 22 whose position is known with respect to the object coordinate system. Signals representing these angles are then telemetered from object 20 as shown by arrows 42 and 44 to a computer 46 for processing resulting in position and/or attitude signals at an output at output 48. If desired, the signals may be processed in the object 20 and the results telemetered to the ground but this requires more equipment in object 20 where space is at a premium and launching forces are formidable.

In FIG. 2 a beam of radiation which may be beam 32, for example, is shown passing through an aperture 50 in an otherwise opaque member or cover 52. Beneath member 52 is a band pass filter 54 which operates to screen out all radiation except that coming from the radiation source 30 for example.

Located a distance D beneath the filter 54 is a photosensitive detector surface 60 which may consist of one or two layers of a photo responsive material such as a silicon. Such a detector surface is marketed by United Detector Technology of 12525 Chadron Ave. Hawthorn, CA. 90250 and identified as a SC-10D. The detectors may be arranged to have four electrodes on each of four sides or only two electrodes on opposite sides. In FIG. 2, two of the two electrode variety are shown connected in layers 62 and 64. Layer 62 includes first and second electrodes 66 and 68 located on opposite sides or edges thereof and, similarly, layer 64 includes first and second electrodes 70 and 72 located on opposite edges thereof but arranged orthogonally with respect to the positions of electrodes 66 and 68. As is well known, the outputs from the electrodes 66 and 68 provide an indication of the position 80 between edges of layer 62 where the beam 32 strikes and the outputs from the electrodes 70 and 72 provide an indication of the position 80 between the edges of layer 64 where the beam 32 strikes. Together the outputs provide an indication of the X-Y coordinates of the position of point 80 in the plane of the detector surface. As mentioned, instead of two layers 62 and 64, a single layer with the four electrodes connected to the four edges thereof may be employed and would operate substantially the same.

If the axis 22 of FIG. 1 is assumed to be a line through aperture 50 perpendicular to the detector surface, then knowing the coordinates of the position of point 80 and the distance D, the angle 1 made by beam 32 with respect to axis 22, and thus in the object's coordinate system can be calculated. If axis 22 does not fall along the line through aperture 50 perpendicular to the surface of the detector, use of a simple transformation matrix will provide it. Similar detectors measure the angles 2 and 3 made by beams 36 and 40 with respect to axis 22 and, when this information is telemetered to a ground computer, the position of object 20 with respect to the reference system 10 in the FIG. 1 can be determined. For example, referring to FIG. 1, it is noted that the position of sources 1, 2 and 3 and their coordinates with respect to system 10 form the base of a triangle having sides D 12, D23 and D13. The beams 32, 36 and 40 extend from points 30, 34 and 38 to the object 20 which then forms the vertex of a tetrahedron in which the triangle formed by D12, D23 and D13 is the base. The angles which exist between sides S1 and S2, between S2 and S3, and between sides S3 and S1 are identified in FIG. 1 as 12, a 23 and a 13, and are determined from the angles such as 1, 2, and 3 described above. It therefore becomes a relatively simple matter to determine the coordinates x, y and z for the object 20 since the formed tetrahedron is completely described by these distances and angles. Therefore, the position of object 20 in space above the earth coordinate system 10 is determined as desired.

In order to determine the attitude of object 20 it is only necessary to know the vectors from two of the sources to the object with respect to the earth coordinate system 10 and with respect to the object 20's coordinate system. This is obtainable from analysis of any two of the angles 1, 2 and 3. More particularly 1 provides an indication of the angle between the beam 32 and axis 22 and 2 provides an indication of the angle between the beam 36 and axis 22. This is enough to completely describe the direction of axis 22 with respect to the object 20. These angles may thereafter be transformed into the coordinate system 10 by successive rotations of the object 10 about its three Euler angles. Therefore, the direction of axis 22 in the coordinate system 10 is determined, as desire. Furthermore, the intersection of the axis 22 with the XY plane of coordinate system 10, which is shown as point 90 in FIG. 1, can also be determined. Knowing the position of point 90 allows the determination of where the axis 22 should strike the earth assuming the topography of the earth is known. This information is important in determining where a weapon shot from object 20 would strike the earth so as to be able to destroy a target.

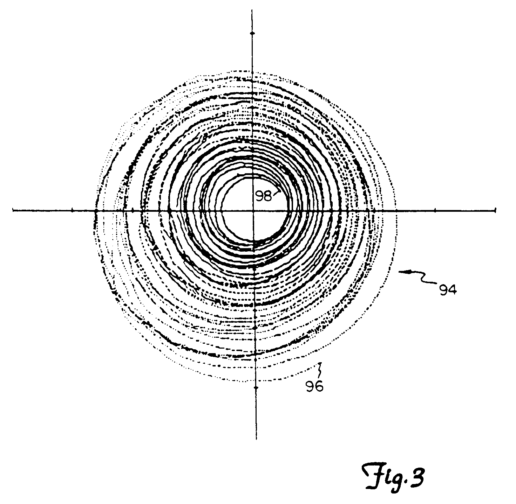

A plot taken of the intersection of axis 22 with the earth as the object falls toward earth, is shown in FIG. 3. In FIG. 3, a spiral like curve 94 has been generated starting at a point 96 and ending at a point 98. Point 96 shows the intersection of axis 22 with the earth at the start of the measurements and then, as the object oscillates and nutates about axis 22, it traces the spiral like curve 94 which become progressively smaller as the object lowers in altitude and finally ends at point 98 where the test run was concluded. In actual practice, if the object 22 is a weapon intent upon destroying a target such as a tank on earth, the trace 94 would show the point where a projectile would hit the target if launched from the object 20 at that time. Then by knowing the position of the target in the trace shown in FIG. 3 the exact point at which the projectile should be launched from object 20 can be determined.

It is therefore seen that I have provided a device and a method for determining the position of an object in space and its attitude with respect to a coordinate system referenced to earth. While I have shown three sources of radiation, the three sources are only necessary if the position of the object in space is unknown and only two are necessary as mentioned above for the determination of the attitude of the object in space. For example, many launching systems include apparatus for determining the trajectory of the object being fired and the position in space is known without the use of the sources of the present invention. In this case only two such sources would be required to determine the attitude since the position was previously determined.

Although the present invention has been described with reference to preferred embodiments, workers skilled in the art will recognize that changes may be made in form and detail without departing from the spirit and scope of the invention.

## Claims

1. Apparatus for determining the coordinates of an object relative to a first coordinate system comprising:

   first radiation source means mounted at a first location having a first set of known coordinates with respect to the first coordinate system and operable to direct radiation to the object;

   second radiation source means mounted at a second location having a second set of known coordinates with respect to the first coordinate system and operable to direct radiation to the object;

   third radiation source means mounted at a third location having a third set of known coordinates with respect to the first coordinate system and operable to direct radiation to the object;

   radiation detecting means mounted on the object and operable to receive beams of radiation from the first, second and third sources and to determine the angles between the beams and an arbitrary reference axis in the object from which the angles between the beams may be determined, a completely defined tetrahedron being thereby formed with the object and the first, second and third sources being at the vertexes thereof so that the coordinates of the object in the first coordinate system may be calculated.

2. Apparatus according to claim 1 wherein the first, second and third beam producing means are lasers.

3. Apparatus according to claim 1 wherein the radiation detecting means comprises a radiation sensitive surface of the type capable of producing an output indicative of the position that the radiation impinges thereon and an opaque cover having an aperture therethrough a predetermined distance above the surface whereby the angle between the beam and the arbitrary reference axis in the object may be determined.

4. Apparatus according to claim 3 wherein the surface includes electrodes connected to the edges thereof which electrodes provide output voltages indicative of the distance from the position that the radiation impinges on the surface of the edges.

5. Apparatus according to claim 1 further including processing means to receive signals from the object indicative of the angles and operable to produce an output indicative of the position of the object in the first coordinate system.

6. Apparatus according to claim 1 wherein the radiation detecting means comprises at least three radiation detectors, each operable to receive a beam from one of the sources and to produce an output indicative of the angle between the beam and the arbitrary reference axis.

7. Apparatus for determining the attitude of an object relative to a first reference coordinate system when the coordinates of the object in a first reference system are known, comprising:

first radiation source means mounted at a first location having a first set of known coordinates with respect to the first coordinate system and operable to direct radiation to the object;

second radiation source means mounted at a second location having a second set of known coordinates with respect to the first coordinate system and operable to direct radiation to the object;

radiation detecting means mounted on the object and operable to receive beams of radiation from the first and second sources and to determine the angles between the beams and an arbitrary reference axis; and,

processing means to receive signals indicative of the angles and operable to produce an output indicative of the attitude of the object in the first coordinate system.

8. Apparatus according to claim 7 wherein the radiation detecting means comprises a radiation sensitive surface of the type capable of producing an output indicative of the position that the radiation impinges thereon and an opaque cover having the aperture therethrough a predetermined distance above the surface whereby the angle between the beam and the arbitrary reference axis in the object may be determined.

9. Apparatus according to claim 8 wherein the surface includes electrodes connected to the edges thereof which electrodes provide output voltages therefrom indicative of the distance from the position that the radiation impinges on the surface to the edges.

10. Apparatus for determining the angle that a beam of radiation makes with respect to a reference axis, comprising:

radiation sensing means having a radiation receiving surface and operable to provide an output signal indicative of the position that radiation impinges on the surface; and,

radiation blocking means having an aperture therethrough mounted a predetermined distance from the surface, the beam of radiation passing through the aperture and striking the surface at a position depending on the angle the beam makes with the reference axis.

Fig. 1

Fig. 2

Fig. 3